(19) **Europäisches Patentamt**
**European Patent Office**
**Office européen des brevets**

(11) **EP 3 048 455 A1**

(12) **EUROPEAN PATENT APPLICATION**
published in accordance with Art. 153(4) EPC

(43) Date of publication:
**27.07.2016 Bulletin 2016/30**

(51) Int Cl.:
***G01S 13/02*** *(2006.01)*

(21) Application number: **14843859.1**

(22) Date of filing: **18.07.2014**

(86) International application number:
**PCT/CN2014/082546**

(87) International publication number:
**WO 2015/035830 (19.03.2015 Gazette 2015/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **16.09.2013 CN 201310423375**

(71) Applicant: **ZTE Corporation
Shenzhen, Guangdong 518057 (CN)**

(72) Inventors:
• **ZHOU, Qi
Shenzhen
Guangdong 518057 (CN)**

• **WANG, Jingang
Shenzhen
Guangdong 518057 (CN)**
• **FAN, Xiaoli
Shenzhen
Guangdong 518057 (CN)**
• **XU, Yanjun
Shenzhen
Guangdong 518057 (CN)**

(74) Representative: **Novagraaf Technologies
Bâtiment O2
2, rue Sarah Bernhardt
CS90017
92665 Asnières-sur-Seine Cedex (FR)**

(54) **METHOD, APPARATUS AND TERMINAL FOR LIFE DETECTION PROCESSING**

(57)    The present disclosure provides a life detection processing method, device and terminal. The method includes that: a WiFi electromagnetic wave is emitted; coherent waves of a reflected wave of the WiFi electromagnetic wave and the WiFi electromagnetic wave are received; and life information is determined according to the received coherent waves. The method solves the problems about the life detection in related art that it is not convenient for users to operate, the penetration is low and the general feature is poor, while offering portability, usability and timeliness of use.

Fig. 1

EP 3 048 455 A1

## Description

## Technical Field

The present disclosure relates to the field of communications, and in particular to a life detection processing method, device and terminal.

## Background

In recent years, various natural disasters and terrible crimes keep increasing; once they occur, people's life and property are damaged greatly. The life detection plays a great role on life rescue and crime prevention. At present, the life detection usually uses thermal imaging or ultrasonic radar imaging, which needs specialized detecting equipment, and the specialized detecting equipment may only be prepared in advance when needed, so the unexpected needs cannot be met well.

Thus, there are problems about the life detection in related art that it is not convenient for users to operate, the penetration is low and the operability is poor.

## Summary

The present disclosure provides a life detection processing method and device, for at least solving the problems about the life detection in related art that it is not convenient for users to operate, the penetration is low and the operability is poor.

According to an aspect of the present disclosure, a life detection processing method is provided, which includes that: a WiFi electromagnetic wave is emitted; coherent waves of a reflected wave of the WiFi electromagnetic wave and the WiFi electromagnetic wave are received; and life information is determined according to the received coherent waves.

Preferably, determining the life information according to the received coherent waves includes that: frequencies of the received coherent waves are obtained; it is judged whether the obtained frequencies include a part in a frequency range of life characteristics; when a judgement result is positive, the life information is determined according to wave source information of the reflected wave.

Preferably, judging whether the obtained frequencies include the part in the frequency range of life characteristics includes that: according to the frequency range of life characteristics, the frequencies of the received coherent wave are filtered; when there are the frequencies left after filtering, it is determined that the obtained frequencies include the part in the frequency range of life characteristics.

Preferably, after determining the life information according to the received coherent waves, the method further includes that: the life information is displayed on a display; and/or, a user is reminded correspondingly according to the life information.

Preferably, the life information includes at least one piece of the following information: whether a life exists, the number of lives, and the position of the life.

According to another aspect of the present disclosure, a life detection processing device is provided, which includes: an emitting component configured to emit the WiFi electromagnetic wave; a receiving component configured to receive the coherent waves of the reflected wave of the WiFi electromagnetic wave and the WiFi electromagnetic wave; and the determining component configured to determine the life information according to the received coherent waves.

Preferably, the determining component includes: an obtaining element configured to obtain the frequencies of the received coherent waves; a judging element configured to judge whether the obtained frequencies include the part in the frequency range of life characteristics; and a determining element configured to, when the judgement result of the judging unit is positive, determine the life information according to the wave source information of the reflected wave.

Preferably, the judging element includes: a filtering sub-element configured to filter the frequency of the received coherent wave according to the frequency range of life characteristics; and a determining sub-element configured to, when there are the frequencies left after filtering, determine that the obtained frequencies include the part in the frequency range of life characteristics.

Preferably, the device further includes: a displaying component configured to display the life information on the display; and/or, a reminding component configured to remind the user correspondingly according to the life information.

According to another aspect of the present disclosure, a terminal is provided, which includes the above device.

By emitting the WiFi electromagnetic wave, receiving the coherent waves of the reflected wave of the WiFi electromagnetic wave and the WiFi electromagnetic wave, and determining the life information according to the received coherent wave, the present disclosure solves the problems about the life detection in related art that it is not convenient for users to operate, the penetration is low and the general feature is poor, while offering portability, usability and timeliness of use.

## Brief Description of the Drawings

The accompanying drawings, constituting a part of the application, described here are used for providing a deeper understanding of the present disclosure; schematic embodiments of the present disclosure and description thereof are used for illustrating the present disclosure and not intended to form an improper limit to the present disclosure. In the accompanying drawings:

Fig. 1 is a flowchart of a life detection processing method according to an embodiment of the present disclosure;
Fig. 2 is a structure diagram of a life detection processing device according to an embodiment of the present disclosure;
Fig. 3 is a preferred structure diagram 1 of a life detection processing device according to an embodiment of the present disclosure;
Fig. 4 is a preferred structure diagram of a determining component 26 in a life detection processing device according to an embodiment of the present disclosure;
Fig. 5 is a preferred structure diagram 2 of a life detection processing device according to an embodiment of the present disclosure;
Fig. 6 is a structure diagram of a terminal according to an embodiment of the present disclosure;
Fig. 7 is a structure diagram of a life control processing system according to an embodiment of the present disclosure; and
Fig. 8 is a flowchart of a life detection processing method according to a preferred embodiment of the present disclosure.

## Detailed Description of the Embodiments

The present disclosure is elaborated below with reference to the accompanying drawings and embodiments. Note that, embodiments and features in embodiments in the application may be combined with each other on condition of not conflicting.

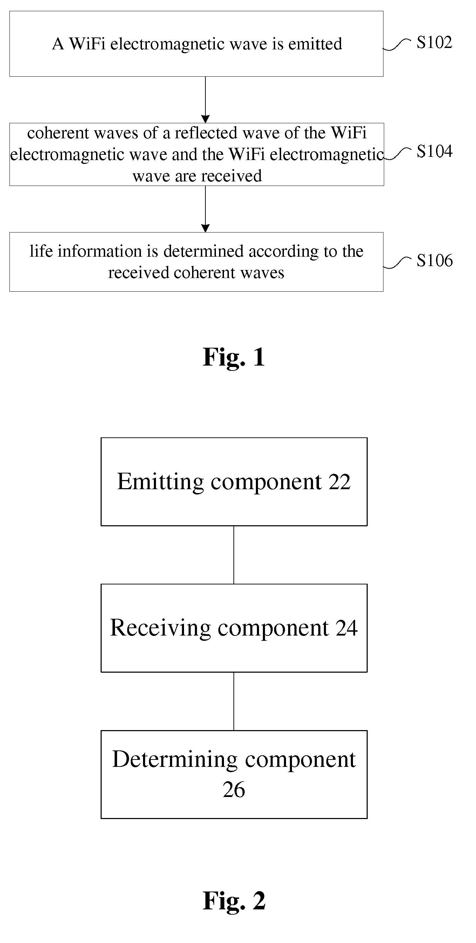

A life detection processing method is provided in the present embodiment. Fig. 1 is a flowchart of a life detection processing method according to an embodiment of the present disclosure; as shown in Fig. 1, the flow includes the following steps:

Step S102: a WiFi electromagnetic wave is emitted;
Step S104: coherent waves of a reflected wave of the WiFi electromagnetic wave and the WiFi electromagnetic wave are received; and
S106: life information is determined according to the received coherent waves, wherein there may be various pieces of life information; for example, the life information may include at least one piece of the following information: whether a life exists, the number of lives, a position of the life, and a size of the life.

Through the above steps, a WiFi wave is emitted on a device which can emit WiFi, and the life information is determined by receiving the coherent waves of the reflected wave of the WiFi and the WiFi wave. Compared with adopting the thermal imaging or the ultrasonic radar imaging to detect the life in related art, the method solves the problems about the life detection in related art that it is not convenient for users to operate, the penetration is low and the operability is poor, while offering portability, usability and timeliness of use.

There may be multiple processing ways adopted to determine the life information according to the received coherent waves, for example, a processing way is based on frequencies, which includes that: the frequencies of the received coherent waves are obtained; it is judged whether the obtained frequencies includes the part in the frequency range of life characteristics; when the judgement result is positive, the life information is determined according to the wave source information of the reflected wave. Certainly, based on the different positions of a detecting terminal, it is feasible to determine the life information according to the different parameters of the coherent waves; for example, if the position of the detecting terminal is open, it is feasible to determine the life information directly according to the received reflected wave.

For determining the life information conveniently and fast according to the received coherent waves, it is also feasible to filter the received coherent waves according to the frequency range of life characteristics so as to judge whether the obtained frequencies are in the frequency range of life characteristics. When there are frequencies left after filtering, it is determined that the obtained frequencies include the part in the frequency range of life characteristics. Through the above processing, a signal wave which is not in the frequency range of life characteristics may be filtered preferentially, that is, a clutter signal is filtered out preferentially, which makes the following judgement about whether the frequency of the coherent wave is in the frequency range of life characteristics simple and fast.

For intuitively displaying the life information around the detecting terminal, after the life information is determined according to the received coherent waves, the life information may be displayed on the display; and/or, the user is reminded correspondingly according to the life information, that is, when it is determined that the life exists around the detecting terminal according to the life information, the detecting terminal sends out alarm information by making a sound or emitting a light to remind the user.

A life detection processing device is also provided in the present embodiment, which is configured to implement the above embodiments and preferred implementations, these which have been described will not repeated here. For example, the term "component" below may implement a combination of software and/or hardware with expected functions. Although the device described in the following embodiments is implemented by software better, it is possible and conceived to implement by hardware or a combination of software and hardware.

Fig. 2 is a structure diagram of a life detection processing device according to an embodiment of the present disclosure. As shown in Fig. 2, the device includes an emitting component 22, a receiving component 24 and a determining component 26. The device is described below.

The emitting component 22 is configured to emit a WiFi electromagnetic wave; the receiving component 24 is connected to the emitting component 22 and configured to receive coherent waves of the reflected wave of the WiFi electromagnetic wave and the WiFi electromagnetic wave; the determining component 26 is connected to the receiving component 24 and configured to determine the life information according to the received coherent waves.

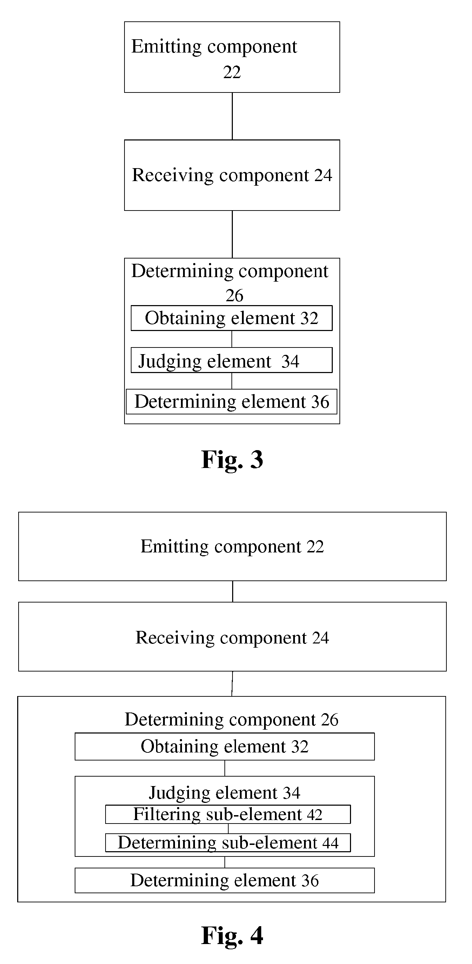

Fig. 3 is a preferred structure diagram of a determining component 26 in a life detection processing device according to an embodiment of the present disclosure. As shown in Fig. 4, the determining component 26 includes an obtaining element 32, a judging element 34 and a determining element 36. The determining component 26 is described below.

The obtaining element 32 is configured to obtain frequencies of the received coherent waves; the judging element 34 is connected to the obtaining element 32 and configured to judge whether the obtained frequencies include the part in the frequency range of life characteristics; the determining element 36 is connected to the judging element 34 and configured to, when the judgement result of the judging element is positive, determine the life information according to the wave source information of the reflected wave.

Fig. 4 is a preferred structure diagram of a judging element 34 in the determining component 26 in the life detection processing device according to an embodiment of the present disclosure. As shown in Fig. 4, the judging element 34 includes a filtering sub-element 42 and a determining sub-element 44. The judging element 34 is described below.

The filtering sub-element 42 is configured to filter the frequencies of the received coherent waves according to the frequency range of life characteristics; the determining sub-element 44 is connected to the filtering sub-element 42 and is configured to, when there are the frequencies left after filtering, determine that the obtained frequencies includes the part in the frequency range of life characteristics.

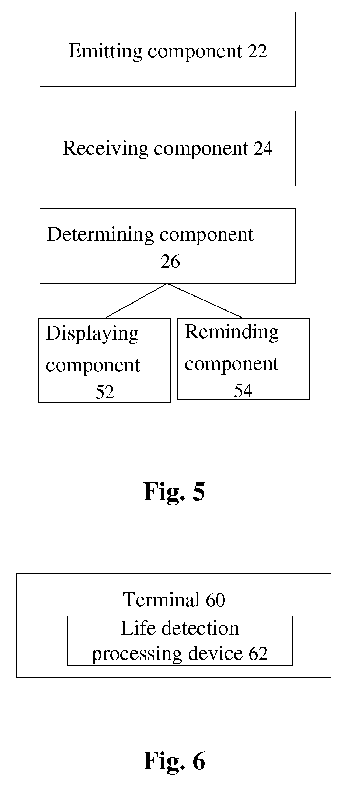

Fig. 5 is a preferred structure diagram 2 of a life detection processing device according to an embodiment of the present disclosure. As shown in Fig. 5, except all the components shown in Fig. 2, the device further includes: a displaying component 52, and/or a reminding component 54; the displaying component 52 and/or the reminding component 54 are/is described below.

The displaying component 52 is connected to the determining component 26 and configured to display the life information on the display.

The reminding component 54 is connected to the determining component 26 and configured to remind the user correspondingly according to the life information.

Fig. 6 is a structure diagram of a terminal according to an embodiment of the present disclosure. As shown in Fig. 6, the terminal 60 includes the above life detection processing device 62.

Aiming at the problems about the life detection in related art that it is not convenient for users to operate the detecting terminal, the penetration is low and the general feature is poor, the applicant considers that the best electromagnetic wave frequency for life detection is 2.45Hz, and the most common frequency of the WiFi is 2.5Hz, so the electromagnetic wave emitted by a WiFi antenna is more suitable for the life detection. At present, the WiFi is quite popular in the field of mobile phone, and there is usually only one emitting antenna. If a receiving antenna may be added for receiving the reflected wave, and the reflected wave is filtered to obtain frequency data which is in accordance with the life characteristics, then the position of the life may be displayed on the display of the mobile phone. Obviously, such a device is advantaged in portability and usability. For example, in a remote place at night, if the user has such a terminal, then the user may know anytime whether there is a stranger getting close, so as to prevent the user from attacks. In view of this, in the present embodiment, a method for detecting a life through a terminal (e.g. the mobile phone) is provided; the method is implemented by emitting a WiFi signal, which solves the problem in related art that it is not suitable for implementing the life detection on a small-sized mobile terminal.

Through the above embodiments and preferred implementations, emitting and receiving electromagnetic waves through the WiFi antenna to detect the number of lives around a WiFi emitting source while using the orientating abilities of the emitting antenna and the receiving antenna to orientate the life is implemented on the mobile terminal, thus the problems of life detection for rescue and crime prevention which are needed in life are solved.

Furthermore, the method of detecting the life around through the mobile phone may detect the number and position of lives around the mobile terminal, besides, when it is detected that there is a life in a certain range of the mobile terminal, the relative position is displayed on the terminal for the user, and the user is reminded with a certain sound.

In related art, the life is recognized mainly through a piece of complicated electrical equipment which senses the thermal distortion of objects around based on the principle of thermal induction, so the method cannot be implemented on a small device, like the mobile terminal. Through the above technologies, living objects around the user may be detected effectively, the speed of movement and the change of position of the objects may be fed back in real time, and the relative positions of the objects are displayed on the mobile terminal to remind the user of safety; meanwhile, the method may also be applied to life rescue.

The preferred implementation of the present disclosure is described below in combination with the accompanying drawings.

The life detection processing method provided by the preferred implementation mainly includes the following steps: an emitting end emits an electromagnetic wave through the WiFi; the electromagnetic wave emitted by the emitting end radiates to the space around through the antenna; the electromagnetic wave generates a reflected wave after meeting a human body; after receiving the reflected wave from the human body, the receiving antenna amplifies, filters and demodulates the received reflected wave, eliminates the clutter signal through a chip on the terminal, and extracts the frequencies of the coherent waves which are generated by the interaction of the life and the emitted signal. After that, the chip orientates to the direction of wave source according to the orientations of the emitting antenna and the receiving antenna to compute the wave source position of the reflected wave.

A computing method for detecting and orientating the life is described below.

Moving target detection: when the emitting end emits the electromagnetic wave, the emitted signal may be expressed as: $S(t) = A_0 \cos(2\pi f_0 t + \mu_0)$, where $f_0$ is a frequency of an emitted wave of the emitting end, $\mu_0$ is an initial phase, and $A_0$ is an amplitude of the wave.

A target echo signal received by the receiving antenna is $Sr(t) = KS(t-tr)$ $i= KA_0\cos[2\pi f0(t-tr) + \mu_0]$, where $tr$ is the time that the target echo signal lags behind the emitted signal; the distance between the target and the emitting end is $R = TrC/2$.

The detection of a human life signal is actually the detection of a target moving at a low speed; when the electromagnetic wave signal reaches a human target, the main reflected echo concentrates in an "air-skin" area. The vibration of the human body in this area is limited in a range, fluctuating around R, so the instantaneous distance between the emitting end and the human body may be $R(t) = R + \Delta R(t)$, where $\Delta R(t)$ represents an amplitude of fluctuation of skin which is caused by the vibration of heartbeat and breath, $\Delta R(t) = \Delta_1 \sin(\omega_1 t) + \Delta_2 \sin(\omega_2 t + \mu_2)$, where, $\omega_1 = 2\pi f_1$, $\omega_2 = 2\pi f_2$ ; $f_1$, $f$ , $\Delta_1$ and $\Delta_2$ are the frequency and amplitude of heartbeat and breath; $\mu_2$ is a constant phase; a useful signal which is reflected back to a radar via the "air-skin" area will have a deviation on the phase, wherein the deviation is

$$\mu(t) = 2\pi * 2r(t)/\lambda = 2\pi/\lambda 2R + 2\pi/\lambda 2\Delta R(t) = \mu_0 + 2\pi f_d t ,$$

So the life signal may be expressed as: $Sr(t) = A\cos(2\pi(f_0 + f_d)t + \theta)$, $A = k_r A_0$, $\theta = \theta_0 + \mu_0$, an expression of its frequency range is:

$$Sr(f) = j\pi A[\delta(2\pi f + 2\pi f_0 + 2\pi f_d)e^{-j\theta} - \delta(2\pi f - 2\pi f_0 - 2\pi f_d)e^{-j\theta}]$$

The above expression is namely the expression of the frequency range of heartbeat and breath of the human body.

After reaching the human body, the emitted electromagnetic wave interacts with the signal with the above frequency to form coherent waves.

A frequency range of the coherent waves which are formed by interaction between the human body and the WiFi emitted signal may be obtained by digital modelling and a data statistic method, wherein the frequency range is namely a frequency band.

Preferably, after receiving a lot of echo fed back from the surroundings, the receiving antenna may filter the signal of which the frequency is not in the above frequency range. The chip computes the emitting position and the number of the life signals left according to the received coherent waves. The relative position of the life is displayed on the display. In addition, with respect to the computation of the position of the reflected wave, an included angle between the emitted wave and the echo may be obtained by virtue of the electromagnetic wave orientating abilities of the emitting antenna and the receiving antenna, and then the position of the wave source of the life is obtained through the triangulation location algorithm.

Preferably, after that, a result computed may be displayed on the display; when the number of lives appearing in a certain range is greater than 2 (including the user him/herself), then the user is reminded by a certain sound or other ways.

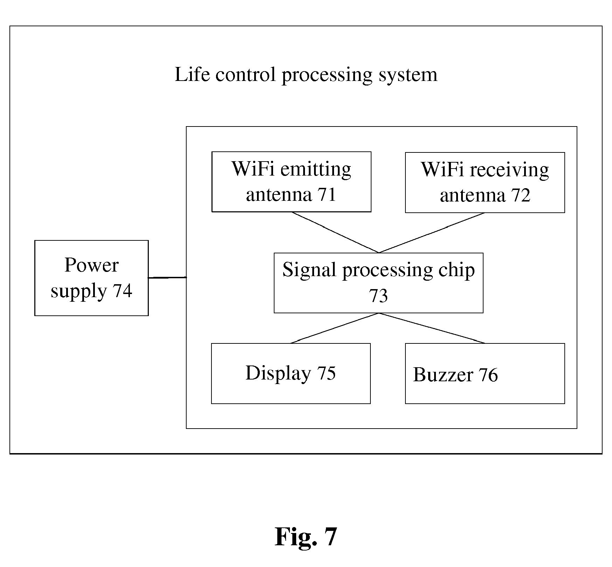

Fig. 7 is a structure diagram of a life control processing system according to an embodiment of the present disclosure. As shown in Fig. 7, the system includes a WiFi emitting antenna 71 (which is functionally equivalent to the emitting component 22), a WiFi receiving antenna 72 (which is functionally equivalent to the receiving component 24), a signal processing chip 73 (which is functionally equivalent to the determining component 26), a power supply 74, a display 75 (which is functionally equivalent to the displaying component 52), and a buzzer 76. The structures included in the system are respectively described below.

The WiFi emitting antenna 71 may be preferably a WiFi antenna emitting electromagnetic wave directionally, and is mainly configured to emit a WiFi electromagnetic signal; in addition, the WiFi emitting antenna may also be configured to echolocate the direction of the electromagnetic wave emitted to the life, and has the orientating ability.

The WiFi receiving antenna 72 may be preferably a WiFi antenna receiving an electromagnetic wave directionally, and is mainly configured to receive a signal of the reflected wave; in addition, the WiFi receiving antenna may also be configured to echolocate the direction of the coherent waves which are generated by the interaction of the life and the electromagnetic wave emitted by the emitting antenna, and has the orientating ability.

The signal processing chip 73 is connected to the WiFi emitting antenna 71 and the WiFi receiving antenna 72, and is configured to filter the electromagnetic signal received by the WiFi receiving antenna to obtain the life signal, compute the number of the life signals, and the position of the life signal, update the position of the life signal in real time, control the buzzer, and so on.

The power supply 74 supplies electric power for the whole system.

The display 75 is connected to the signal processing chip 73 and configured to display the position of the life around, and/or display the number of the lives around.

The buzzer 76 is connected to the signal processing chip 73 and configured to, after determining the life information according to the received coherent waves, remind the user of the existence of the life around.

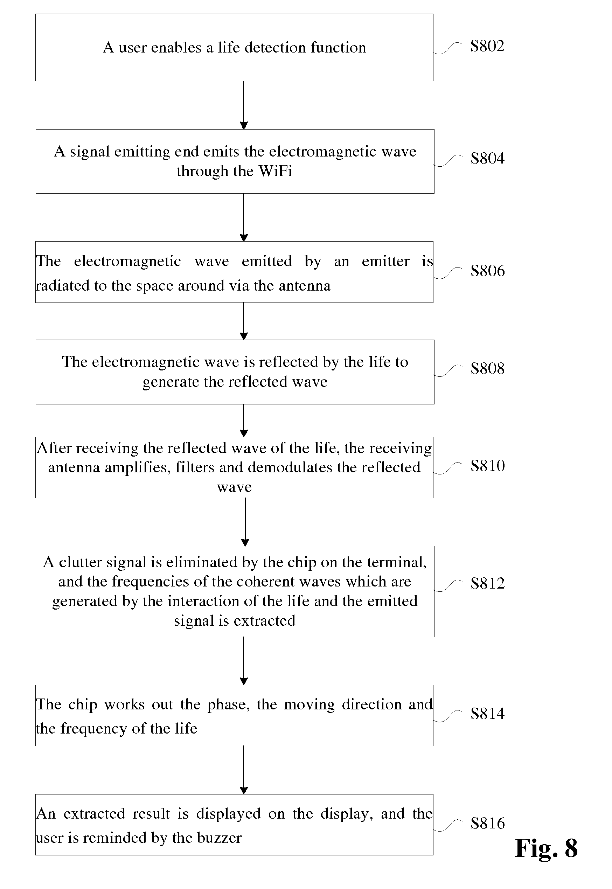

Fig. 8 is a flowchart of a life detection processing method according to a preferred embodiment of the present disclosure. As shown in Fig. 8, the flow includes the following steps:

Step S802: the user enables a life detection function when needed.

Step S804: the signal emitting end emits the electromagnetic wave through the WiFi.

Step S806: the electromagnetic wave is radiated to the space around.

Step S808: the electromagnetic wave is reflected by the life to generate the reflected wave.

Step S810: after receiving the reflected wave of the life, the receiving antenna amplifies filters and demodulates the reflected wave.

Step S812: the clutter signal is eliminated by the chip on the terminal to extract the frequencies of the coherent waves which are generated by the interaction of the life and the emitted signal is extracted.

Step S814: the chip works out the phase, the moving direction and the frequency of the life.

Step S816: an extracted result is displayed on the display, and the user is reminded by a buzzer.

Obviously, those skilled in the art should appreciate that the above components and steps of the present disclosure may be implemented by a general-purpose computing device, and they may be centralized in a single computing device or distributed on a network composed of multiple computing devices; optionally, they may be implemented by a program code which is capable of being executed by the computing device, so that they may be stored in a storage device and executed by the computing device; in addition, under some conditions, the presented or described steps may be executed in an order different from that described here; or they are made into integrated circuit components, respectively; or multiple components and steps of them are made into a single integrated circuit component to realize. Thus, the present disclosure is not limited to any particular combination of hardware and software.

The above is only the preferred embodiment of the present disclosure and not intended to limit the present disclosure; for those skilled in the art, the present disclosure may have various modifications and changes. Any modifications, equivalent replacements, improvements and the like within the spirit and principle of the present disclosure shall fall within the scope of the claims of the present disclosure.

## Industrial Applicability

Through the above embodiments and preferred implementations, the present disclosure solves the problems about the life detection in related art that it is not convenient for users to operate, the penetration is low and the general feature is poor, while offering portability, usability and timeliness of use.

## Claims

1. A life detection processing method, comprising:

   emitting a WiFi electromagnetic wave;
   receiving coherent waves of a reflected wave of the WiFi electromagnetic wave and the WiFi electromagnetic wave; and
   determining life information according to the received coherent waves.

2. The method according to claim 1, wherein determining the life information according to the received coherent waves comprises:

   obtaining frequencies of the received coherent waves;
   judging whether the obtained frequencies comprises a part in a frequency range of life characteristics;
   when a judgement result is positive, determining the life information according to wave source information of the reflected wave.

3. The method according to claim 2, wherein judging whether the obtained frequencies comprise the part in the frequency range of life characteristics comprises:

   according to the frequency range of life characteristics, filtering the frequencies of the received coherent waves;
   when there are frequencies left after filtering, determining that the obtained frequencies comprise the part in the frequency range of life characteristics.

4. The method according to claim 1, wherein after determining the life information according to the received coherent waves, the method further comprises:

   displaying the life information on a display; and/or,
   reminding a user correspondingly according to the life information.

5. The method according to any one of claims 1 to 4, wherein the life information comprises at least one piece of the following information:

   whether a life exists, the number of lives, and a position of the life.

6. A life detection processing device, comprising:

   an emitting component configured to emit a WiFi electromagnetic wave;
   a receiving component configured to receive coherent waves of a reflected wave of the WiFi electromagnetic wave and the WiFi electromagnetic wave; and
   a determining component configured to determine life information according to the received coherent waves.

7. The device according to claim 6, wherein the determining component comprises:

   an obtaining element configured to obtain frequencies of the received coherent waves;
   a judging element configured to judge whether the obtained frequency comprises a part in a frequency range of life characteristics; and
   a determining element configured to, when a judgement result of the judging element is positive, determine the life information according to wave source information of the reflected wave.

8. The device according to claim 7, wherein the judging element comprises:

a filtering sub-element configured to filter the frequencies of the received coherent waves according to the frequency range of life characteristics; and
a determining sub-element configured to, when there are the frequencies left after filtering, determine that the obtained frequencies comprise the part in the frequency range of life characteristics.

9. The device according to claim 6, further comprising:

a displaying component configured to display the life information on a display; and/or,
a reminding component configured to remind a user correspondingly according to the life information.

10. A terminal, comprising a device according to any one of claims 6 to 9.

| A WiFi electromagnetic wave is emitted | S102 |

↓

| coherent waves of a reflected wave of the WiFi electromagnetic wave and the WiFi electromagnetic wave are received | S104 |

↓

| life information is determined according to the received coherent waves | S106 |

**Fig. 1**

| Emitting component 22 |

| Receiving component 24 |

| Determining component 26 |

**Fig. 2**

```
┌─────────────────────────┐
│   Emitting component     │
│          22              │
└─────────────────────────┘
            │
┌─────────────────────────┐
│  Receiving component 24  │
└─────────────────────────┘
            │
┌─────────────────────────┐
│  Determining component   │
│          26              │
│ ┌─────────────────────┐  │
│ │ Obtaining element 32│  │
│ └─────────────────────┘  │
│ ┌─────────────────────┐  │
│ │ Judging element  34 │  │
│ └─────────────────────┘  │
│ ┌─────────────────────┐  │
│ │Determining element 36│ │
│ └─────────────────────┘  │
└─────────────────────────┘
```

**Fig. 3**

```
┌──────────────────────────────────────────┐
│           Emitting component 22           │
└──────────────────────────────────────────┘
                     │
┌──────────────────────────────────────────┐
│           Receiving component 24          │
└──────────────────────────────────────────┘
                     │
┌──────────────────────────────────────────┐
│          Determining component 26         │
│ ┌──────────────────────────────────────┐ │
│ │        Obtaining element 32          │ │
│ └──────────────────────────────────────┘ │
│ ┌──────────────────────────────────────┐ │
│ │          Judging element 34          │ │
│ │ ┌──────────────────────────────────┐ │ │
│ │ │     Filtering sub-element 42     │ │ │
│ │ └──────────────────────────────────┘ │ │
│ │ ┌──────────────────────────────────┐ │ │
│ │ │  Determining sub-element 44      │ │ │
│ │ └──────────────────────────────────┘ │ │
│ └──────────────────────────────────────┘ │
│ ┌──────────────────────────────────────┐ │
│ │        Determining element 36        │ │
│ └──────────────────────────────────────┘ │
└──────────────────────────────────────────┘
```

**Fig. 4**

Emitting component 22

Receiving component 24

Determining component
26

Displaying
component
52

Reminding
component
54

**Fig. 5**

Terminal 60

Life detection
processing device 62

**Fig. 6**

**Fig. 7**

| | |
|---|---|
| A user enables a life detection function | S802 |

↓

| | |
|---|---|
| A signal emitting end emits the electromagnetic wave through the WiFi | S804 |

↓

| | |
|---|---|
| The electromagnetic wave emitted by an emitter is radiated to the space around via the antenna | S806 |

↓

| | |
|---|---|
| The electromagnetic wave is reflected by the life to generate the reflected wave | S808 |

↓

| | |
|---|---|
| After receiving the reflected wave of the life, the receiving antenna amplifies, filters and demodulates the reflected wave | S810 |

↓

| | |
|---|---|
| A clutter signal is eliminated by the chip on the terminal, and the frequencies of the coherent waves which are generated by the interaction of the life and the emitted signal is extracted | S812 |

↓

| | |
|---|---|
| The chip works out the phase, the moving direction and the frequency of the life | S814 |

↓

| | |
|---|---|
| An extracted result is displayed on the display, and the user is reminded by the buzzer | S816 |

**Fig. 8**

# INTERNATIONAL SEARCH REPORT

| | |
|---|---|
| International application No. |
| PCT/CN2014/082546 |

## A. CLASSIFICATION OF SUBJECT MATTER

G01S 13/02 (2006. 01) i

According to International Patent Classification (IPC) or to both national classification and IPC

## B. FIELDS SEARCHED

Minimum documentation searched (classification system followed by classification symbols)

G01S 13/-

Documentation searched other than minimum documentation to the extent that such documents are included in the fields searched

Electronic data base consulted during the international search (name of data base and, where practicable, search terms used)

WPI, EPODOC, CNKI, CNPAT, Web of Knowledge: WiFi, live, life, detect, electromagnetic wave, send, transmit, receive, living body, body

## C. DOCUMENTS CONSIDERED TO BE RELEVANT

| Category* | Citation of document, with indication, where appropriate, of the relevant passages | Relevant to claim No. |
|---|---|---|
| X | CN 101324666 A (UNIV ELECTRONIC SCIENCE & TECH) 17 December 2008 (17.12.2008) description, pages 1 and 2, claims 6 and 7 | 1-10 |
| A | WO 9520170 A1 (SELECTRONIC VERTRIEBS GMBH) 27 July 1995 (27.07.1995) the whole document | 1-10 |
| A | WO 2012020365 A1 (KONINKL PHILIPS ELECTRONICS NV INC.) 16 February 2012 (16.02.2012) the whole document | 1-10 |

☐ Further documents are listed in the continuation of Box C.　　☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 September 2014 | 24 October 2014 |

| Name and mailing address of the ISA | Authorized officer |
|---|---|
| State Intellectual Property Office of the P. R. China No. 6, Xitucheng Road, Jimenqiao Haidian District, Beijing 100088, China Facsimile No. (86-10) 62019451 | LI, Pengxin Telephone No. (86-10) 010-61648461 |

Form PCT/ISA /210 (second sheet) (July 2009)

## INTERNATIONAL SEARCH REPORT
### Information on patent family members

International application No.

PCT/CN2014/082546

| Patent Documents referred in the Report | Publication Date | Patent Family | Publication Date |
|---|---|---|---|
| CN 101324666 A | 17 December 2008 | None | |
| WO 9520170 A1 | 27 July 1995 | AU 1452495 A | 08 August 1995 |
| | | EP 0740799 A1 | 06 November 1996 |
| | | DE 19580065 T1 | 13 March 1997 |
| | | KR 977000866 A | 12 February 1997 |
| | | US 5790032 A | 04 August 1998 |
| | | CN 1145665 A | 19 March 1997 |
| | | CN 1146242 A | 26 March 1997 |
| | | RU 2162235 C2 | 20 January 2001 |
| | | JP 3433382 B2 | 04 August 2003 |
| | | CN 1094199 C | 13 November 2002 |
| | | CA 2181680 C | 14 November 2006 |
| | | WO 9520171 A1 | 27 July 1995 |
| | | CA 2181681 A1 | 27 July 1995 |
| | | AU 707656 B2 | 15 July 1999 |
| | | AU 1531095 A | 08 August 1995 |
| | | AU 687156 B2 | 19 February 1998 |
| | | CN 1090327 C | 04 September 2002 |
| | | JP 09507647 A | 05 August 1997 |
| | | JP 09507648 A | 05 August 1997 |
| | | JP 3701673 B2 | 05 October 2005 |
| | | US 6122537 A | 19 September 2000 |
| | | HK 1014753 A1 | 25 February 2005 |
| | | AT 265691 T | 15 May 2004 |
| | | RU 2160043 C2 | 10 December 2000 |
| | | DE 9400950 U | 24 August 1995 |
| | | EP 0740800 A1 | 06 November 1996 |
| WO 2012020365 A1 | 16 February 2012 | EP 2417908 A1 | 15 February 2012 |

Form PCT/ISA /210 (patent family annex) (July 2009)

## INTERNATIONAL SEARCH REPORT
Information on patent family members

| | International application No. |
|---|---|
| | PCT/CN2014/082546 |

| Patent Documents referred in the Report | Publication Date | Patent Family | Publication Date |
|---|---|---|---|
| | | US 2013135137 A1 | 30 May 2013 |
| | | EP 2603144 A1 | 19 June 2013 |
| | | CN 103068304 A | 24 April 2013 |
| | | JP 2013538602 A | 17 October 2013 |

Form PCT/ISA/210 (patent family annex) (July 2009)